# EUROPÄISCHE PATENTANMELDUNG

(11) **EP 2 053 377 A1**
(43) Veröffentlichungstag der Anmeldung: **29.04.2009**
(21) Anmeldenummer: 07020582.8
(22) Anmeldetag: 22.10.2007
(51) Int. Cl.: G01N 1/28, G01N 1/06

(54) **Verfahren und Vorrichtung zur dreimimensionalen Mikrodissektion**

(71) Anmelder: MMI GmbH, 85386 Eching bei München (DE)
(72) Erfinder: Niehren, Stefan, Dr., 85250 Altomünster (DE)
(74) Vertreter: HOFFMANN EITLE

(57) **Zusammenfassung**

Die Erfindung betrifft ein Verfahren zur dreidimensionalen Mikrodissektion zur Separation definierter Strukturen im Submillimeter-Bereich mittels kalter Laserablation oder mittels Multiphotonenabsorption, wobei die Freistellung der zu separierenden Strukturen mithilfe von Richtungsinformationen in alle Raumrichtungen erfolgt. Ferner betrifft die Erfindung ein 3D Mikrodissektionssystem zur Separation definierter dreidimensionaler Strukturen aus einer Probe, umfassend: eine Steuereinheit; eine Ablationskammer mit einem darin vorgesehenen Probenhalter, an den die zu bearbeitende Probe anzubringen ist und der entlang einer Achse V bewegbar und um eine Drehachse R drehbar ist, wobei der Probenhalter mit Stellvorrichtungen vorgesehen ist, die mit der Steuereinheit verbunden sind, welche die Stellvorrichtungen dazu veranlassen kann, den Probenhalter entlang der Achse H zu bewegen und um die Drehachse R zu drehen, und eine Laservorrichtung, die wenigstens teilweise durch ein Laserfenster, das in der Ablationskammer vorgesehen ist, in die Ablationskammer eingebracht ist, mit der Steuereinheit verbunden ist und eine verstellbaren Optik aufweist, die mittels der Steuereinheit so verstellt werden kann, dass der Laserstrahl in dem Bereich der Probe fokussiert wird.

## Beschreibung

Die vorliegende Erfindung betrifft ein Verfahren zur Separation definierter dreidimensionaler Strukturen insbesondere aus biologischen Objekten und eine Vorrichtung zur Durchführung dieses Verfahrens.

### Stand der Technik

Die Mikrodissektion erlaubt die gezielte Isolierung zumeist biologischen Materials aus einer Probe. Im Stand der Technik werden üblicherweise mechanische oder zweidimensionale laserbasierte Mikrodissektionsverfahren und -vorrichtungen verwendet, mithilfe derer sich aus den meist biologischen Proben definierte Strukturen herausschneiden und auffangen lassen.

Ein zweidimensionales laserbasiertes Mikrodissektionsverfahren ist beispielsweise in der DE 10 2006 000 934 A1 beschrieben. Darin wird ein biologisches Präparat, beispielsweise ein histologischer Gewebeschnitt, auf einen Träger aufgebracht. Anschließend findet eine Selektierung des Präparats durch Laserbestrahlung statt, wobei ein Computer einen motorbetriebenen Mikroskoptisch, auf dem sich der Träger befindet, steuert. Nach dem Ausschneiden eines Objekts wird dieses durch einen Laserschuss beschleunigt und von einem Auffangmittel aufgefangen. Die Freistellung der zu separierenden Strukturen erfolgt hierbei mittels Richtungsinformationen in zwei Raumrichtungen.

Weitere Laser-Mikrodissektionssysteme für Objekte, die auf einem planaren Träger angeordnet sind, sind aus der WO 97/29355 A und der WO 01/73398 A bekannt.

Bei laserbasierten Mikrodissektionsverfahren beträgt die maximale schneidbare Schichtdicke üblicherweise etwa 100 Mikrometer. Größere Volumina mit entsprechend größeren Schichtdicken sind mit bekannten Lasermikrodissektionsverfahren nicht separierbar. Die klassischen Lasermikrodissektionsverfahren beruhen alle auf mikroskopischen Aufbauten, bei denen die Bewegungsfreiheitsgrade auf die Achsen senkrecht zur optischen Achse beschränkt sind. Das klassische Bearbeitungsverfahren bedarf weiterhin einer aufwendigen Probenvorbereitung, da die zu bearbeitenden Probenschichten erst vorab hergestellt werden müssen. Üblicherweise führt schon die Probenvorbereitung zu Veränderungen und Degeneration des im letzen Prozessschritt zu untersuchenden Materials. Ferner ist eine Tiefkühlung der Probe während der gesamten Bearbeitung in den bekannten laserbasierten Mikrodissektionsverfahren nicht möglich. Der mikroskopische Aufbau der klassischen Anlagen erzwingt die Nutzung einer gemeinsamen optischen Komponente, dem Objektiv, zur Fokussierung des Lasers als auch der Bildgebung. Eine solche Kombination erzwingt Kompromisse zwischen dem bildgebenden Charakter des Objektives im sichtbaren Lichtwellenlängenbereich als auch der Transmission des Laser und der Qualität der Laserfokussierung.

Mithilfe mechanischer Verfahren sind auch dickere Proben nutzbar. Jedoch können tiefgekühlte Materialien nur schwer mechanisch geschnitten werden. Ferner ist eine gewünschte Genauigkeit für mikroskopische Anwendungen mithilfe mechanischer Verfahren nur schwer zu erzielen.

Sowohl das mechanische Verfahren als auch die klassische Lasermirodissektion sind sehr zeitaufwendig und somit ist die erzeugbare Probenmenge stark beschränkt. Viele Analyseverfahren der Proteomik als auch der Genomik sind für solch kleine Probemengen nicht geeignet.

Zur Analyse von Saatgut in frühen Wachstumsstadien ist es notwendig, ungestörtes und nicht degradiertes Zellmaterial aus einem Samenkorn zu entnehmen, da sich nur aus ungestörten Materialien brauchbare Analysen erstellen lassen. Ähnliche Voraussetzungen für die Analyse gelten auch bei der Separation von Biopsiematerialien. Es besteht daher ein Bedarf nach Mikrodissektionsverfahren und -vorrichtungen, mit deren Hilfe sich nicht degradierte Strukturen in einer Probe isolieren bzw. separieren lassen.

### Darstellung der Erfindung

Es ist daher Aufgabe der vorliegenden Erfindung, ein Verfahren zur Separation definierter dreidimensionaler nicht oder wenig degradierter Strukturen aus einer Probe und eine Vorrichtung zur Durchführung dieses Verfahrens bereitzustellen.

Die Aufgabe wird durch ein Verfahren nach Anspruch 1 und Vorrichtungen nach den Ansprüchen 20 und 25 gelöst. Weitere vorteilhafte Ausführungsformen ergeben sich aus den Unteransprüchen.

Danach erfolgt das Verfahren zur dreidimensionalen Mikrodissektion zur Separation definierter dreidimensionaler Strukturen im Submillimeter-Bereich mittels kalter Laserablation oder mittels Multiphotonenabsorption aus einer Probe, wobei die Freistellung der zu separierenden Strukturen mithilfe von Richtungsinformationen in alle Raumrichtungen erfolgt. Der Submillimeterbereich umfasst hierbei charakteristische Längen der zu separierenden Strukturen bis zu einem Millimeter oder ein Volumen der zu separierenden Strukturen bis etwa 1 mm³. Unter kalter Laserablation soll das Abtragen von Material durch Bestrahlung mit kurzwelligem Laserlicht verstanden werden, sodass die Probe nicht durch Photonenabsorption aufgeheizt wird. Das Laserlicht regt also nicht die molekularen Rotations-bzw. Vibrationsbanden an. Alternativ zur kalten Laserablation, kann die Materialbearbeitung auf Multiphotonenabsorptionsprozessen beruhen. Bei Multiphotonenabsorptionsprozessen wird eine sehr hohe Photonendichte erzeugt. Dadurch wird die gleichzeitige Absorption mehrerer Photonen durch das Material wahrscheinlich und die Summe der Energien der Einzelphotonen in das Material eingetragen. Meist werden zur Erzeugung der hohen Photonendichten stark fokussierte Laser mit extrem kurzen Laserpulsen im Piko- oder Femtosekundenbereich eingesetzt. Vorzugsweise besteht die Probe aus einem biologischen Material. Vorzugsweise emittiert der Laser Impulse mit Pulszeiten, die kleiner als 5ns sind.

In der vorliegenden Erfindung wird ein vollständig neuer Ansatz zur Ausführung von laserbasierter Mikrodissektion verfolgt. Durch den Verzicht auf die Präparation von Materialschichten und der Erhöhung der Anzahl der Bewegungsfreiheitsgrade wird die Dissektion von Materialvolumen möglich. Eine genügende Anzahl von Bewegungsfreiheitsgraden ermöglicht dem Anwender eine sehr flexible und freie Vorgabe der Form des zu entnehmenden Materialvolumens. Da weiterhin eine geschlossene Kühlkette von der Probenpräparation bis zur Probenanalyse mit diesem Ansatz realisiert werden kann, wird es möglich sein, nahezu ungestörte und nicht degenerierte Proben mit ausreichendem Probevolumen zu erzeugen. Die Erzeugung von ausreichenden Probemengen stellt hohe Ansprüche an die Bearbeitungsgeschwindigkeit. Die Entkopplung der Laserfokussieroptik von der Beobachtungsoptik ermöglicht die optimale Nutzung der zur Verfügung stehenden Laserleistung.

Die Realisierung der beschriebenen Erfindung auf der Basis von kalter Laserablation wird durch die Verfügbarkeit neuer Festkörperlaser mit Pulsenergien im Bereich von 100µJ und Repetitionsraten von mehreren Hundert Hertz gefördert.

Vorzugsweise umfasst das Verfahren zur dreidimensionalen Mikrodissektion zur Separation definierter dreidimensionaler Strukturen aus einer Probe die Schritte:
a) Bereitstellen eines dreidimensionalen Volumenmodells zumindest der zu separierenden Strukturen;
b) wenigstens teilweises Freistellen der zu separierenden Strukturen entsprechend des dreidimensionalen Volumenmodells mittels eines dreidimensionalen kalten Laserablationsverfahrens; das Verfahren mittels einer dreidimensionalen kalten Laserablation eröffnet eine neue Methode zur Probenverarbeitung. Die Methode ermöglicht auch die Realisation einer geschlossenen Kühlkette, sodass die Probe während dem Verarbeitungsprozess dauerhaft gekühlt bzw. gefroren ist. Das Verfahren gemäß der vorliegenden Erfindung verspricht eine schonende Entnahme der zu separierenden Strukturen, die im Folgenden auch als VOI (Volume of Interest) bezeichnet werden. Durch das Verfahren können nacheinander dünne Schichten der Probe um das VOI abgetragen werden. Dadurch wird eine Verringerung der Gefügeumwandlung durch die Laserbestrahlung erreicht. Ferner verspricht das Verfahren der vorliegenden Erfindung eine Präzision in Bezug auf das entnommene Volumen, die bis jetzt nicht möglich war. Mit dem Verfahren kann eine Präzision im Bereich von 10 µm erreicht werden.

Vorzugsweise erfolgt das Bereitstellen eines dreidimensionalen Volumenmodells gemäß Schritt a) mittels eines bildgebenden Verfahrens, das zumindest die zu separierenden Strukturen in ihren dreidimensionalen Strukturen erfassen kann. Bildgebende Verfahren haben für dreidimensionale Strukturen in den letzten Jahren eine beachtliche Weiterentwicklung erfahren. Es stehen standardisierte Verfahren und Systeme zur Verfügung und können daher effektiv und kostengünstig in das vorliegende Verfahren integriert werden.

Vorzugsweise schließt das bildgebende Verfahren eines der folgenden Verfahren ein: Kernspintomographie, Computertomographie, Ultraschall, 3D Modellierung aus lichtmikroskopischen Visualisierungsverfahren; die oben genannten Verfahren sind besonders verbreitet und ausgereift und sind daher besonders geeignet, in der vorliegenden Erfindung angewendet zu werden.

Vorzugsweise schließt die Bildgebung eine Auflösung im 10 Mikrometer Bereich ein. Bildgebende Verfahren der heutigen Generation können eine Auflösung in diesem Bereich erreichen und tragen daher dazu bei, die Forderung nach einer besonders hohen Separationspräzision im vorliegenden Verfahren zu erfüllen. Alternativ können Volumenmodelle auch aufgrund von Parametrisierungen direkt vom Anwender erstellt bzw. gezeichnet werden.

Vorzugsweise werden optische Parameter zur Kalibrierung und/oder Referenzierung verwendet, um die Position und Ausrichtung des dreidimensionalen Volumenmodells mit denen in das 3D Mikrodissektionssystem eingebrachten Probe in Übereinstimmung bringen zu können. Optische Parameter können bereits vorhandene strukturelle Merkmale in der Probe sein oder können künstlich auf- oder eingebracht werden. Um ein vollautomatisches Separationsverfahren durchführen zu können, ist eine möglichst genaue Ausrichtung der Probe in Bezug auf das Volumenmodell hilfreich. Die Ausrichtung über optische Parameter durchzuführen ist vorzuziehen, da eine Ausrichtung softwaregestützt mithilfe optischer Bauelemente, die zumindest teilweise bereits vorhanden sein können, durchführbar ist. Somit ist eine besonders hohe Ausrichtungspräzision erreichbar, die dazu beiträgt, die Forderung nach einer besonders hohen Separationspräzision in der vorliegenden Erfindung zu erfüllen.

Vorzugsweise umfasst das Verfahren der vorliegenden Erfindung ferner den Schritt a1), der vor dem Schritt b) durchzuführen ist, nämlich das Vorbereiten der Probe, um das zu separierende Volumen daraus entnehmen zu können, wobei die Vorbereitung der Probe eines der folgenden Verfahren einschließt: Einbetten der Probe in Kunststoffmaterialien, Einbetten der Probe in langkettige organische Substanzen wie Wachs oder Parafin, Tränken der Proben mit plastifizierenden Flüssigkeiten, Tieffrieren der Probe; Eine solche Vorbereitung der Probe trägt zur Vermeidung von Gefügeumwandlungen im dreidimensionalen kalten Laserablationsverfahren bei, so dass nicht oder zumindest wenig degradierte Strukturen separiert werden können.

Vorzugsweise umfasst die Vorbereitung der Probe Einfrieren der Probe auf Temperaturen unter 4°C. Das Kühlen der Probe stellt eine besonders einfache, schnelle und kostengünstige Möglichkeit dar, Gefügeumwandlungen während des Verarbeitungsprozesses zu reduzieren.

Vorzugsweise umfasst das dreidimensionale kalte Laserablationsverfahren gemäß Schritt b) folgende weitere Schritte:
b1) Befestigen der Probe an einem Probenkopf, der entlang einer Achse V bewegbar und um eine Drehachse R drehbar ist, wobei die Bewegung automatisch mittels jeweiligen Stellvorrichtungen, die mit einer Steuereinheit verbunden sind, durchführbar ist;
b2) Festlegen einer Bewegungsabfolge für den Probenhalter zur sequenzielle Bearbeitung der Probe und speichern dieser in einer Speichereinheit der Steuereinheit,
b3) Durchführen des Ablationsverfahrens durch Abarbeiten der Bewegungsabfolge, wobei die Steuereinheit die Stellvorrichtungen entsprechend der Bewegungsabfolge ansteuert. Durch das Verfahren können nacheinander dünne Schichten der Probe abgetragen werden, um das VOI freizustellen. Dadurch wird eine Verringerung der Gefügeumwandlung durch die Laserbestrahlung erreicht. Ferner verspricht das Verfahren der vorliegenden Erfindung eine Präzision in Bezug auf das entnommene Volumen, die bis jetzt nicht möglich war. Dazu verhilft insbesondere das vollautomatische Separationsverfahren, wobei anhand berechneter Bewegungsschritte der Laser und der Probenkopf angesteuert werden, so dass Ungenauigkeiten, die insbesondere durch manuelles Ausschneiden des VOIs nicht zu vermeiden sind, verringert werden können.

Alternativ kann die relative Bewegung zwischen Laserfokus und Probe auch durch eine Anordnung realisiert werden, bei der die Laseranordnung auf einem Robotingsystem montiert wird und somit mit genügenden Freiheitsgraden bewegt werden kann und die Probe fest montiert ist.

Alternativ können die nötigen Freiheitsgrade zwischen einer Bewegung der Laseranordnung und der Bewegung der Probe verteilt sein.

Vorzugsweise erfolgt das Freistellen der zu separierenden Strukturen mittels einer Laservorrichtung, die wenigstens teilweise in eine Ablationskammer, in der das Freistellen der zu separierenden Strukturen stattfindet, eingebracht ist. Laser haben in letzter Zeit als Schneidwerkzeuge an Bedeutung gewonnen, da sie eine besonders hohe Genauigkeit der Schnitte ermöglichen. Schnitte können präzise auf eine Weise durchgeführt werden, so dass umliegende Strukturen nicht oder nur wenig beeinflusst werden. Somit können nicht oder zumindest wenig degradierte Strukturen mit einer hohen Präzision separiert werden.

Vorzugsweise wird Schritt b) an einer zumindest teilweise gefrorenen Probe durchgeführt. Das vorliegende Verfahren ermöglicht das Separieren an einer tiefgefrorenen Probe, was beträchtlich dazu beiträgt, Gefügeumwandlungen zu vermeiden.

Desweiteren kann das Verfahren dadurch gekennzeichnet sein, dass eine räumliche Dimension der Probe mindestens eine Größenordnung kleiner als die beiden anderen ist.

Vorzugsweise umfasst das Verfahren gemäß der vorliegenden Erfindung den Schritt Überwachen des Ablationsverfahrens unter Verwendung einer Kameraanordnung. Um einen gewünschten Qualitätsstandard sicher zu stellen, bietet sich eine Überwachung durch ein Kamerasystem an, das einfach zu installieren und kostengünstig ist.

Vorzugsweise ist die Kameraanordnung mit der Steuereinheit verbunden, die mittels Bildbearbeitungsverfahren und den charakteristischen optischen Parametern zur Kalibrierung und/oder Referenzierung der absoluten Orientierung der Probe verwendet wird, wobei das Verfahren den zusätzlichen Schritt, der zwischen Schritt b1) und b3) durchzuführen ist, Kalibrieren der Probe mit dem dreidimensionalen Volumenmodell umfasst. Die Kameraanordnung kann geeigneter weise neben der Überwachung des Verfahrens auch für die Ausrichtung der Probe verwendet werden. Somit können aufgrund der Doppelfunktion Kosten und Platzbedarf eingespart werden.

Alternativ kann das bildgebende System auf handelsüblichen Mikroskopen basieren, an die eine Kamera angeschlossen werden kann.

Vorzugsweise umfasst das Verfahren der vorliegenden Erfindung den Schritt c), der während und/oder nach Schritt b) durchzuführen ist, Trennen und Entnehmen der separierten Strukturen, wobei der Schritt wenigstens eines der folgenden Verfahren einschließt: Einsammeln der herunterfallenden separierten Strukturen in Auffanggefäßen, Abschießen von teilweise separierten Strukturen mittels eines Laserschusses, Entnahme durch Adhäsion, Entnahme durch Absaugen, Entnahme durch Abspülen, Entnahme durch Ultraschall, Entnahme durch Elektrostatik; die obigen Verfahren sind besonders zur Entnahme und ggf. finalen Trennung des VOI geeignet, da sie einfach und kostengünstig durchführbar sind.

Die Aufgabe der vorliegenden Erfindung wird ferner mit einem 3D Mikrodissektionssystem zur Separation definierter dreidimensionaler Strukturen aus einer Probe gelöst, das umfasst:
eine Steuereinheit;
eine Ablationskammer mit einem darin vorgesehenen Probenhalter, an den die zu bearbeitende Probe anzubringen ist und der entlang einer Achse V bewegbar und um eine Drehachse R drehbar ist, wobei der Probenhalter mit Stellvorrichtungen vorgesehen ist, die mit der Steuereinheit verbunden sind, welche die Stellvorrichtungen dazu veranlassen kann, den Probenhalter entlang der Achse V zu bewegen und um die Drehachse R zu drehen, und
eine Laservorrichtung, die wenigstens teilweise durch ein Laserfenster, das in der Ablationskammer vorgesehen ist, in die Ablationskammer eingebracht ist, mit der Steuereinheit verbunden ist und eine verstellbare Optik aufweist, die mittels der Steuereinheit so verstellt werden kann, dass der Laserstrahl in den Bereich der Probe fokussiert wird oder die Probe durch ein zusätzliches Verstellelement entlang der optischen Achse in den Laserfokus verschoben werden kann. Mithilfe eines solchen Mikrodissektionssystems kann das obige Verfahren mit seinen oben genannten Vorzügen und Vorteilen durchgeführt werden.

Vorzugsweise kann der Probenhalter ferner mittels einer Stellvorrichtung entlang einer dritten Achse H verfahren werden, wobei die Steuereinheit mit dieser Stellvorrichtung verbunden ist und die Stellvorrichtung dazu veranlassen kann, den Probenhalter entlang der Achse H zu verfahren. Es ist erforderlich, dass der Laser auf den zu schneidenden Bereich genau fokussiert wird. Das Vorsehen eines weiteren Freiheitsgrades, was die präzise Ausrichtung der Probe erleichtert, verhilft dazu, den zu schneidenden Bereich der Probe so in den fokussierten Bereich zu bringen, dass umliegende Bereiche wenig gestört werden. Somit können nicht oder zumindest wenig degradierte Strukturen separiert werden.

Aus den selben Gründen weist die Laservorrichtung vorzugsweise eine Laserstellvorrichtung auf, die mit der Steuereinheit verbunden ist, wobei der Kippwinkel des Laserstrahls durch die Steuereinheit eingestellt werden kann.

Vorzugsweise ist der Probenhalter ein mechanischer Halter oder ein Halter, an dem die Probe mittels Einbettung in einem Gel oder dergleichen fixiert ist.

Vorzugsweise weist die Ablationskammer eine Kühlvorrichtung auf, welche die Kammer abkühlen kann, so dass die Probe gekühlt, vorzugsweise tiefgekühlt, wird oder in einem gekühlten Zustand vorzugsweise einen tiefgekühlten Zustand, beibehalten werden kann. Das Kühlen der Probe stellt eine besonders einfache, schnelle und kostengünstige Möglichkeit dar, Gefügeumwandlungen während des Verarbeitungsprozesses zu reduzieren.

Dazu beträgt die Temperatur in der Ablationskammer vorzugsweise weniger als 4°C, typischerweise etwa -18°C, da bei diesen Temperaturen Gefügeumwandlungen mit der Zeit deutlich reduziert werden.

Vorzugsweise steht die optische Achse des Lasers senkrecht auf der Drehachse R, wobei die Drehachse R und V zusammenfallen und senkrecht auf der Achse H stehen. Die senkrechte bzw. parallele Anordnung der Achsen ist mit hoher Genauigkeit durchführbar. Ferner kann eine solche Anordnung die Berechnung der Bewegungsabfolge vereinfachen.

Vorzugsweise sind in der Ablationskammer zwei Auffangbehälter A1 und A2 unterhalb der Probe vorgesehen. Das Entnehmen und Trennen des VOIs mittels Auffangbehälter ist einfach und kostengünstig durchführbar.

Alternativ wird die Aufgabe der vorliegenden Erfindung mit einem 3D Mikrodissektionssystem zur Separation definierter dreidimensionaler Strukturen aus einer Probe gelöst, das umfasst:
eine Steuereinheit,
eine auf einem Robotersystem montierte Lasereinheit mit genügend Bewegungsfreiheitsgraden, sodass der Laserfokus gezielt an der Probe angesetzt werden kann,
eine Miniaturkühlkammer aus lasertransparentem Material,
ein Lichtmikroskop zur Beobachtung der Probe und des Prozessablaufs, sowie der Aufnahme der Probenhalterung bzw. Miniaturkühlkammer.

### Kurze Beschreibung der Zeichnung

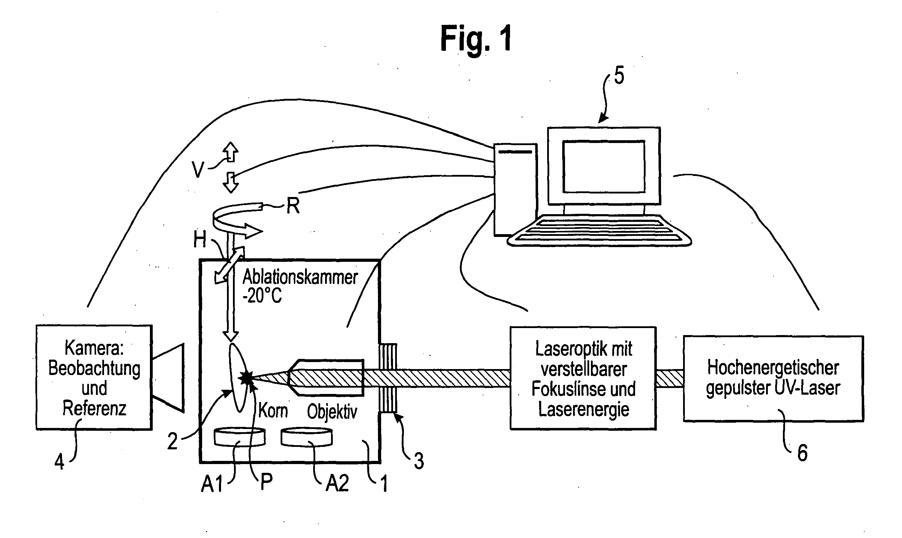

Figur 1 zeigt schematisch eine Vorrichtung zur Separation definierter dreidimensionaler Strukturen aus einer Probe gemäß einer Ausführungsform der vorliegenden Erfindung.

### Wege zur Ausführung der Erfindung

Figur 1 zeigt schematisch eine Vorrichtung zur Separation definierter dreidimensionaler Strukturen aus einer Probe gemäß einer Ausführungsform der Erfindung. Das auszuschälende Volumen wird im Folgenden auch als VOI (volume of interest) bezeichnet.

In der vorliegenden Ausführungsform befindet sich in einer Ablationskammer 1 ein Probenkopf mit einer Probe 2. Die Ablationskammer 1 umfasst ein Gehäuse, in dem das Ausschälen definierter dreidimensionaler Strukturen aus der Probe durchgeführt wird. Der Probenkopf ist entlang einer vertikalen Achse V und einer Horizontalen Achse H verschiebbar und um eine Drehachse R drehbar angeordnet. Die Achsen V und R können, wie in der vorliegenden Ausführungsform, identisch sein. Die Bewegungen des Probenkopfes entlang der Achse V und H und um die Achse R erfolgt motorisiert mittels entsprechender Stellvorrichtungen, die in der Figur 1 nicht gezeigt sind. Der Probenkopf und die Probe sind gemäß dieser Ausführung um drei Freiheitsgrade bewegbar. Der Probenhalter kann beispielsweise ein mechanischer Halter sein oder so ausgebildet sein, dass die Probe mittels Einbettung in einem Gel oder dergleichen fixiert wird. Die Ablationskammer 1 enthält eine Kühlvorrichtung, die in der Figur nicht gezeigt ist, so dass die Probe in der Kammer tiefgekühlt werden kann oder in einem tiefgekühlten Zustand beibehalten werden kann. Die Kühlvorrichtung kann herkömmliche Kältemaschinen und Sensoren umfassen, um die Temperatur im Inneren der Ablationskammer 1 auf einen gewünschten Wert einzustellen und auf diesem halten zu können.

Die Präparation der Probe erfolgt mittels einer Laservorrichtung 6, die neben einem hochenergetischen, gepulsten UV-Laser eine verstellbare Laseroptik mit Objektiv umfasst und wenigstens teilweise in die Ablationskammer 1 durch ein Laserfenster 3 eingebracht ist. In der vorliegenden Ausführungsform befindet sich ein Objektiv der Laservorrichtung 6 innerhalb der Ablationskammer 1. Es versteht sich von selbst, dass zusätzlich oder alternativ zu der entlang dreier Freiheitsgrade bewegbaren Anordnung des Probenkopfs auch die Laservorrichtung 6 oder ein Teil der Laservorrichtung drehbar und/oder verschiebbar angeordnet sein kann. Insbesondere kann eine Kippfunktion des Laserstrahls relativ zur optischen Achse des Lasers vorgesehen sein, um den Fokuspunkt P des Lasers zu verschieben.

Die Steuerung der Probenausrichtung entlang der zur Verfügung stehenden Freiheitsgrade wird durch eine Steuereinheit 5 durchgeführt, die in der vorliegenden Ausführungsform einen PC umfasst. Dieser ist mit der Laservorrichtung 6 und den Stellvorrichtungen verbunden. Ferner kann der PC mit der Kühlvorrichtung verbunden sein, um die Temperatur im Inneren der Ablationskammer 1 zu überwachen.

Der Präparationsvorgang wird mithilfe einer Kameraanordnung 4 überwacht, die ebenfalls mit dem PC verbunden ist. Obwohl die Kameraanordnung 4 in der Figur außerhalb der Ablationskammer 1 angedeutet ist, kann diese auch innerhalb der Ablationskammer 1 vorgesehen sein. Die Kameraanordnung 4 dient nicht nur zur Überwachung und Qualitätssicherung sondern wird auch zur Kalibrierung und Referenzierung charakteristischer optischer Parameter verwendet, um die Probe, wie weiter unten beschrieben ist, mit einem Volumenmodel in Übereinstimmung zu bringen.

Im Folgenden wird ein Verfahren zur Separation definierter dreidimensionaler Strukturen, welches die obige Vorrichtung verwendet, beschrieben.

Zunächst wird ein dreidimensionales Volumenmodell der Probe oder zumindest der zu separierenden Bereiche erstellt oder beschafft. Hierzu können bereits zur Verfügung stehende Modelle, beispielsweise auch theoretische Modelle, der Probe verwendet werden. Üblicherweise findet hierbei allerdings ein bildgebendes Verfahren, wie beispielsweise Kernspintomographie, Computertomographie, Ultraschall oder lichtmikroskopische Verfahren, Anwendung. Nach der Aufnahme eines dreidimensionalen Bildes wird dieses in einem für die Verarbeitung in einem Computer geeigneten Rechnermodel in der Steuervorrichtung gespeichert. Die auszuschälenden Volumina werden durch ein dreidimensionales Datenfeld bestimmt, wobei dieses Datenfeld vom Anwender durch Auswahl des zu selektierenden Volumens festgelegt wird. Die Festlegung des VOI kann sowohl anhand vorgefertigter erstellter Volumenmodelle als auch aus direkten 3D Visualisierungen des zu bearbeitenden Objekts erfolgen. Alternativ kann das VOI auch aus direkt vom Benutzer eingegebenen Parametrisierungen oder Freihandzeichnungen berechnet und erstellt werden.

Anschließend wird eine Probe in eine vorzugsweise auf -18°C abgekühlte Ablationskammer 1 eingebracht und mit dem Probenhalter fixiert. Um die Position des visualisierten Volumens mit der im 3D Mikrodissektionssystem eingebrachten Probe in Übereinstimmung bringen zu können, müssen Referenzierungsmethoden wie Kalibrierpunkte oder Referenzierung über charakteristische optische Parameter eingeführt werden. Die Referenzierung kann entweder über künstlich angebrachte Referenzpunkte oder auch über charakteristische Strukturen des zu bearbeitenden Objekts erfolgen. Eine mögliche Realisierung der optischen Visualisierung besteht aus der Beobachtung der Probe mit einem Makroobjektiv und einer digitalen Kamera, die in der Kameraanordnung 4 enthalten sind. Das Objektiv und die Kamera können direkt in der Ablationskammer 1 vorgesehen sein. Die Referenzierung und Kalibrierung kann mittels der Kameraanordnung 4 und bekannter Bildverarbeitungsverfahren erfolgen. Das Ausrichten der Probe mit dem Volumenmodel heißt, ein Koordinatensystem des Datenfeldes relativ zur eingespannten Probe über ein Referenzverfahren zu bestimmen.

Ebenfalls softwareunterstützt kann die Berechnung einer Bewegungsabfolge erfolgen, nach der die Steuereinheit 5 die Stellvorrichtungen und den Laser ansteuert, damit dieser die zu separierenden Bereiche trennt. Aus dem VOI wird also ein Bewegungsalgorithmus berechnet, der es ermöglicht das VOI in seiner Gesamtheit oder in der Form von Fragmenten vollautomatisch auszuschälen.

Als nächstes wird ein Laser durch das Laserfenster 3 eingeführt und mittels einer Linse auf die Probe fokussiert.

Die optische Achse des Lasers steht dabei im Wesentlichen senkrecht zur Drehachse R. Laserparameter wie Laserleistung und Fokusposition sind einstellbar und können geeigneterweise von der Steuereinheit 5 eingestellt werden.

Der Ablationsprozess startet vorzugsweise am untersten Punkt der Probe und trägt während der Drehung der Probe um die Drehachse R und Verfahren der Probe entlang den Achsen V und H Material entsprechend der berechneten Bewegungsabfolge ab. Das abgetragene Material fällt in einen Auffangbehälter A1, der unterhalb der Probe in der Ablationskammer 1 vorgesehen ist. Ist ein Zielvolumen ausgeschält, wird dieses per Laserstrahl von der restlichen Probe abgeschnitten und fällt in einen Auffangbehälter A2, der ebenfalls unterhalb der Probe in der Ablationskammer 1 vorgesehen ist. Hierbei können entweder die Auffangbehälter A1 und A2 ausgetauscht oder verschoben werden, oder der Probenkopf kann mittels der Stellvorrichtungen direkt über dem jeweiligen Auffangbehälter angeordnet werden.

Mittels einer beispielsweise digitalen Kamera kann der komplette Bearbeitungsvorgang dokumentiert werden. Ein zusätzliches Bildverarbeitungsmodul kann die separierten Volumina bestimmen und somit eine automatische Qualitätskontrolle übernehmen.

## Patentansprüche

1. Verfahren zur dreidimensionalen Mikrodissektion zur Separation definierter Strukturen im Submillimeter-Bereich mittels kalter Laserablation oder mittels Multiphotonenabsorption aus einer Probe, wobei die Freistellung der zu separierenden Strukturen mithilfe von Richtungsinformationen in alle Raumrichtungen erfolgt.

2. Verfahren nach Anspruch 1, **dadurch gekennzeichnet, dass** die Probe aus einem biologischen Material besteht.

3. Verfahren nach Anspruch 1 oder 2, **dadurch gekennzeichnet, dass** der Laser Impulse mit Pulszeiten kleiner 5ns emittiert.

4. Verfahren nach einem der vorhergehenden Ansprüche, ferner umfassend den Schritt, der vor dem Freistellen durchzuführen ist: Bereitstellen eines dreidimensionalen Volumenmodells zumindest der zu separierenden Strukturen.

5. Verfahren nach Anspruch 4, **dadurch gekennzeichnet, dass** das Erstellen eines dreidimensionalen Volumenmodells mittels eines bildgebenden Verfahrens erfolgt, das zumindest die zu separierenden Strukturen in ihren dreidimensionalen Strukturen erfassen kann.

6. Verfahren nach Anspruch 5, **dadurch gekennzeichnet, dass** das bildgebende Verfahren eines der folgenden Verfahren einschließt: Kernspintomographie, Computertomographie, Ultraschall, 3D Modellierung aus lichtmikroskopischen Visualisierungsverfahren.

7. Verfahren nach Anspruch 5 oder 6, **dadurch gekennzeichnet, dass** die Bildgebung eine Auflösung im 10 Mikrometer Bereich einschließt.

8. Verfahren nach Anspruch 4 bis 7, **dadurch gekennzeichnet, dass** das Erstellen eines dreidimensionalen Volumenmodells auf einer durch den Benutzer definierten Parametrisierung oder Freihandzeichnung beruht.

9. Verfahren nach einem der Ansprüche 4 bis 8, **dadurch gekennzeichnet, dass** charakteristische optische Parameter zur Kalibrierung und/oder Referenzierung verwendet werden, um die Position und Ausrichtung des dreidimensionalen Volumenmodells mit denen der in das 3D Mikrodissektionssystem eingebrachten Probe in Übereinstimmung zu bringen.

10. Verfahren nach einem der vorhergehenden Ansprüche, ferner umfassend den Schritt, der vor dem Freistellen durchzuführen ist:
Vorbereiten der Probe, um das zu separierende Volumen daraus entnehmen zu können, wobei die Vorbereitung der Probe wenigstens eines der folgenden Verfahren einschließt:
Einbetten der Probe in Kunststoffmaterialien, Einbetten der Probe in langkettige organische Substanzen wie Wachs oder Parafin, Tränken der Proben mit plastifizierenden Flüssigkeiten, Einfrieren der Probe

11. Verfahren nach Anspruch 10, wobei die Vorbereitung der Probe das Einfrieren der Probe auf Temperaturen unter 4°C umfasst.

12. Verfahren nach einem der vorhergehenden Ansprüche, **dadurch gekennzeichnet, dass** das dreidimensionale kalte Laserablationsverfahren folgende weitere Schritte umfasst:
Befestigen der Probe an einem Probenkopf, der entlang einer Achse (V) bewegbar und um eine Drehachse (R) drehbar ist, wobei die Bewegung automatisch mittels jeweiligen Stellvorrichtungen, die mit einer Steuereinheit (5) verbunden sind, durchführbar ist;
Definieren einer Bewegungsabfolge für den Probenhalter zur sequenziellen Bearbeitung der Probe und Speichern dieser Bewegungsabfolge in einer Speichereinheit der Steuereinheit (5),
Durchführen des Ablationsverfahrens durch Abarbeiten der Bewegungsabfolge, wobei die Steuereinheit (5) die Stellvorrichtungen entsprechend der Bewegungsabfolge ansteuert.

13. Verfahren nach einem der vorhergehenden Ansprüche, **dadurch gekennzeichnet, dass** das Freistellen der zu separierenden Strukturen mittels einer Laservorrichtung (6) erfolgt, die wenigstens teilweise in eine Ablationskammer (1), in der das Freistellen der zu separierenden Strukturen stattfindet, eingebracht ist.

14. Verfahren nach einem der vorhergehenden Ansprüche, **dadurch gekennzeichnet, dass** das Freistellen an einer zumindest teilweise gefrorenen Probe durchgeführt wird.

15. Verfahren nach einem der vorhergehenden Ansprüche, **dadurch gekennzeichnet, dass** eine räumliche Dimension der Probe mindestens eine Größenordnung kleiner als die beiden anderen ist.

16. Verfahren nach einem der vorhergehenden Schritte, ferner umfassend den Schritt des Überwachens des Ablationsverfahrens unter Verwendung einer Kameraanordnung (4).

17. Verfahren nach Anspruch 16, **dadurch gekennzeichnet, dass** die Kameraanordnung (4) mit der Steuereinheit (5) verbunden ist und mittels Bildbearbeitungsverfahren und den charakteristischen optischen Parametern zur Kalibrierung und/oder Referenzierung der absoluten Orientierung der Probe verwendet wird, wobei das Verfahren den zusätzlichen Schritt des Kalibrierens der Probe mit dem dreidimensionalen Volumenmodell umfasst.

18. Verfahren nach einem der vorhergehenden Ansprüche, **dadurch gekennzeichnet, dass** das Verfahren den Schritt des Trennens und Entnehmen der separierten Strukturen aufweist, wobei der Schritt wenigstens eines der folgenden Verfahren einschließt: Einsammeln der herunterfallenden separierten Strukturen in Auffanggefäßen, Abschießen von teilweise separierten Strukturen mittels eines Laserschusses, Entnahme durch Adhäsion, Entnahme durch Absaugen, Entnahme durch Abspülen, Entnahme durch Ultraschall, Entnahme durch Elektrostatik.

19. Verfahren nach einem der vorhergehenden Ansprüche, **dadurch gekennzeichnet, dass** der Laser ein UV-Laser ist.

20. 3D Mikrodissektionssystem zur Separation definierter dreidimensionaler Strukturen aus einer Probe, umfassend:
eine Steuereinheit (5);
eine Ablationskammer (1) mit einem darin vorgesehenen Probenhalter, an den die zu bearbeitende Probe anzubringen ist und der entlang einer Achse (V) bewegbar und um eine Drehachse (R) drehbar ist, wobei der Probenhalter mit Stellvorrichtungen versehen ist, die mit der Steuereinheit (5) verbunden sind, welche die Stellvorrichtungen dazu veranlassen kann, den Probenhalter entlang der Achse (V) zu bewegen und um die Drehachse (R) zu drehen, und
eine Laservorrichtung (6), die wenigstens teilweise durch ein Laserfenster (3), das in der Ablationskammer (1) vorgesehen ist, in die Ablationskammer (1) eingebracht ist, mit der Steuereinheit (5) verbunden ist und eine verstellbaren Optik aufweist, die mittels der Steuereinheit (5) so verstellt werden kann, dass der Laserstrahl in dem Bereich der Probe fokussiert wird oder die Probe durch ein zusätzliches Verstellelement entlang der optischen Achse in den Laserfokus verschoben werden kann.

21. 3D Mikrodissektionssystem nach Anspruch 20, **dadurch gekennzeichnet, dass** der Probenhalter ferner mittels einer Stellvorrichtung entlang einer dritten Achse (H) verfahren werden kann, wobei die Steuereinheit (5) mit dieser Stellvorrichtung verbunden ist und die Steuereinheit (5) dazu veranlassen kann, den Probenhalter entlang der dritten Achse (H) zu verfahren.

22. 3D Mikrodissektionssystem nach Anspruch 20 oder 21, **dadurch gekennzeichnet, dass** die Laservorrichtung (6) eine Laserstellvorrichtung aufweist, die mit der Steuereinheit (5) verbunden ist, wobei der Kippwinkel des Laserstrahls durch die Steuereinheit (5) eingestellt werden kann.

23. 3D Mikrodissektionssystem nach einem der Ansprüche 20 bis 22 und Anspruche und Anspruch 20, **dadurch gekennzeichnet, dass** die optische Achse des Lasers senkrecht auf der Drehachse (R) steht, die Drehachse (R) und (V) zusammenfallen und senkrecht auf der Achse (H) stehen.

24. 3D Mikrodissektionssystem nach einem der Ansprüche 20 bis 23**, dadurch gekennzeichnet, dass** in der Ablationskammer (1) zwei Auffangbehälter (A1, A2) vorgesehen sind.

25. 3D Mikrodissektionssystem zur Separation definierter dreidimensionaler Strukturen aus einer Probe, umfassend:
eine Steuereinheit,
eine auf einem Robotersystem montierte Lasereinheit mit einer Fokusiereinrichtung und mit Bewegungsfreiheitsgraden, so dass der Laserfokus gezielt an der Probe angesetzt werden kann,
ein Lichtmikroskop zur Beobachtung der Probe und des Prozessablaufs, sowie der Aufnahme eines Probenhalters bzw. einer Miniaturkühlkammer.

26. 3D Mikrodissektionssystem nach einem der Ansprüche 20 bis 25, **dadurch gekennzeichnet, dass** der Probenhalter in eine Miniaturkühlkammer aus lasertransparentem Material eingebaut ist.

27. 3D Mikrodissektionssystem nach einem der Ansprüche 20 bis 26, **dadurch gekennzeichnet, dass** der Probenhalter ein mechanischer Halter oder ein Halter ist, an dem die Probe mittels Einbettung in einem Gel oder dergleichen fixiert ist.

28. 3D Mikrodissektionssystem nach einem der Ansprüche 20 bis 27, **dadurch gekennzeichnet, dass** die Ablationskammer (1) bzw. die Miniaturkühlkammer eine Kühlvorrichtung aufweist, welche die Kammer abkühlen kann, so dass die Probe gekühlt wird oder in einem gekühlten Zustand beibehalten werden kann.

29. 3D Mikrodissektionssystem nach Anspruch 28, **dadurch gekennzeichnet, dass** die Temperatur in der Ablationskammer(1) bzw. der Miniaturkühlkammer weniger als 4°C, typischerweise etwa -18°C beträgt.
